# EUROPEAN PATENT APPLICATION

(11) **EP 2 357 593 A1**
(43) Date of publication of application: **17.08.2011**
(21) Application number: 10153539.1
(22) Date of filing: 12.02.2010
(51) Int. Cl.: G06Q 10/00

(54) **System and method for controlling event entries**

(71) Applicant: RESEARCH IN MOTION LIMITED, Waterloo, Ontario N2L 3W8 (CA)
(72) Inventor: Logan, Adrian, Michael, Waterloo Ontario N2L 5Z5 (CA); Garg, Neeraj, Waterloo Ontario N2L 5Z5 (CA)
(74) Representative: MERH-IP Matias Erny Reichl Hoffmann

(57) **Abstract**

To address situations wherein details and information stored in an electronic device, for example event entries, are sensitive in nature, a system and method are provided wherein such details and information are protected from inadvertent or malicious access and exposure. A flag or option is provided when creating an event entry that flags or marks the entry as sensitive. The details associated with the entry can be suppressed until a specified time before the event occurs and can be deleted or hidden after the event occurs. Access to the details at other times can be permitted through re-authentication of the user, for example using a password. In addition, data storage recovery can be effected by removing old entries irrespective of the sensitivity of the event or its details.

## Description

### TECHNICAL FIELD

The following relates to systems and methods for controlling event entries.

### BACKGROUND

Electronic devices such as smart phones, personal digital assistants (PDAs), cellular telephones, laptops, etc. often include features for organizing a user's schedule. Such features may include lists, calendars, address books, memo pads, etc. Often times, users have sensitive or confidential events such as surprises or sensitive meetings that they do not wish to divulge to others either inadvertently or via malicious activities on the part of the others. Despite including security features such as password protection and other "lock-out" mechanisms, it may be possible for a device to be accessed before the lock-out mechanism is triggered and thus opportunities may exist for the sensitive information to be seen and copied or recorded.

In addition, irrespective of the sensitivity of such information, the remaining storage capacity of an electronic device may become depleted over time due as data associated with the information is typically continually added to the device. While the complete removal of old information and data on an electronic device is known, such an approach can corrupt cross-references or dependencies between items.

### GENERAL

There may be provided a method, a computer readable medium comprising instructions for performing the method, and a mobile device comprising computer executable instructions for performing the method, the method for controlling event entries in a computing device, the method comprising: enabling an event entry to be stored in the computing device; receiving a designation for the event entry indicative of the event being sensitive and indicating the designation in association with the event entry; receiving a request to access the event entry; obtaining the event entry and examining the event entry to detect the designation; and upon detecting the designation, suppressing the output of information associated with the event entry according to one or more criteria associated with the designation.

### BRIEF DESCRIPTION OF THE DRAWINGS

Embodiments will now be described by way of example only with reference to the appended drawings wherein:

FIG. 1 is a schematic diagram illustrating a system in which data items are pushed from a host system to a mobile device.

FIG. 2 is a block diagram of an example embodiment of a mobile device.

FIG. 3 is a block diagram illustrating example ones of the other software applications and components shown in FIG. 2.

FIG. 4 is an example graphical user interface (GUI) for an event entry screen.

FIG. 5 shows the event entry screen of FIG. 4 with a condensed menu being displayed.

FIG. 6 is an example GUI for a day view showing an example event entry being displayed therein.

FIG. 7 shows the day view of FIG. 6 after removal of the event entry in one embodiment.

FIG. 8 shows the day view of FIG. 6 after removal of the event entry in another embodiment wherein a notice is displayed in its place.

FIG. 9A is a schematic diagram illustrating recurring events.

FIG. 9B is a schematic diagram illustrating a recurring event re-adjusted following deletion of an event entry.

FIG. 10 is a flow diagram illustrating an example set of computer executable instructions for removing an event entry after the event has transpired.

FIG. 11 is a schematic block diagram illustrating an example exchange of data between a mobile device and a host system.

### DETAILED DESCRIPTION OF THE DRAWINGS

It has been recognized that various situations arise wherein details and information stored in an electronic device, for example calendar event entries, are sensitive in nature, and thus such details and information should be protected from inadvertent or malicious access and exposure. It has been found that a flag or option can be provided when creating a new entry that flags or marks the entry as sensitive. The details associated with the entry can be suppressed until a specified time before the event occurs and can be deleted or hidden after the event occurs. Access to the details at other times can be permitted through re-authentication of the user, for example using a password.

It has also been recognized that in addition to suppressing sensitive information through the removal or deletion of such information, deletion can also recover storage space, in particular when large files or other data is associated with the event and its entry being stored in the device.

The following examples include communications between mobile or handheld devices, which will be commonly referred to as mobile devices hereinafter and referred to by numeral 10. As will be discussed, the principles discussed below are equally applicable to other computing devices.

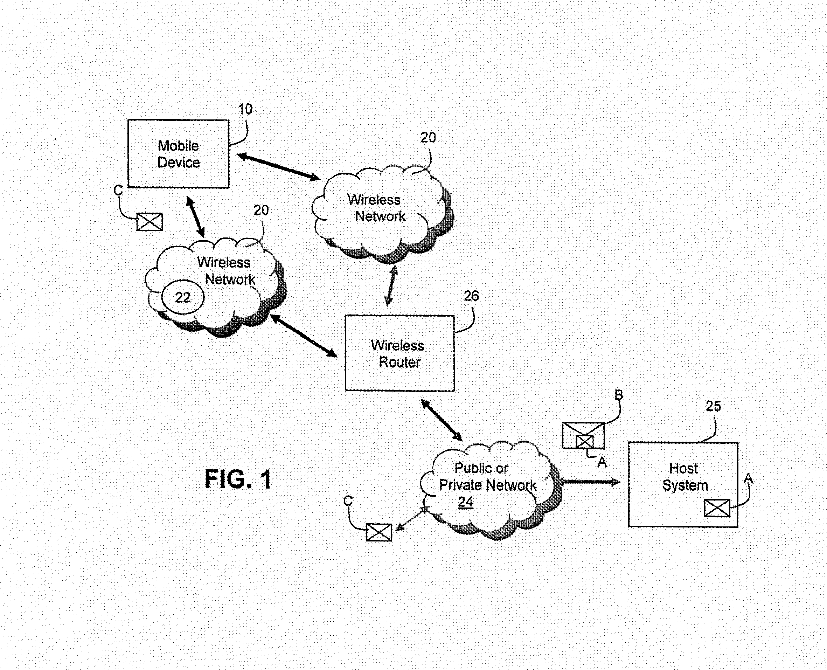

The mobile device 10 can be a multi-way communication device with advanced data communication capabilities including the capability to communicate with other mobile devices 10 or computer systems through a network of transceiver stations. The mobile device 10 may also have the capability to allow voice communication. Depending on the functionality provided by the mobile device 10, it may be referred to as a data messaging device, a multi-way pager, a cellular telephone with data messaging capabilities, a wireless Internet appliance, or a data communication device (with or without telephony capabilities). The mobile device 10 can also be one that is used in a system that is configured for continuously routing all forms of pushed information from a host system 25 to the mobile device 10. One example of such a system will now be described making reference to FIG. 1.

FIG. 1 is an example system diagram showing the redirection of user data items (such as message A or C) from an intermediary computer system (host system) 25 to the user's mobile device 10 via a wireless router 26. The wireless router 26 provides the wireless connectivity functionality as it acts to both make transparent most of the wireless network's 20 complexities, and it also implements features necessary to support pushing data to the mobile device 10. Although not shown, a plurality of mobile devices may access data from the host system 25. In this example, message A in FIG. 1 represents an internal message sent from, e.g. a desktop computer (not shown) within the host system 25, to any number of server computers in the network (e.g. LAN), which may, in general, include a database server, an event server, an E-mail server or a voice-mail server.

Message C in FIG. 1 represents an external message from a sender that is not directly connected to the host system 25, such as the user's mobile device 10, some other user's mobile device (not shown), or any user connected to the public or private network 24 (e.g. the Internet). Message C could be e-mail, voice-mail, event information, database updates, web-page updates or could even represent a command message from the user's mobile device 10 to the host system 25. The host system 25 may comprise, along with the typical communication links, hardware and software associated with a computer network system, one or more wireless mobility agents, a TCP/IP connection, a collection of data stores, (for example a data store for e-mail could be an off-the-shelf mail server like Microsoft Exchange® Server or Lotus Notes® Server), all within and behind a network firewall.

The mobile device 10 may be adapted for communication within wireless network 20 via wireless links, as required by each wireless network 20 being used. As an illustrative example of the operation for a wireless router 26 shown in FIG. 1, consider a data item A, repackaged in outer envelope B (the packaged data item A now referred to as "data item (A)") and sent to the mobile device 10 from an Application Service Provider (ASP) in the host system 25. Within the ASP is a computer program, similar to a wireless mobility agent, running on any computer in the ASP's environment that is sending requested data items from a data store to a mobile device 10. The mobile-destined data item (A) is routed through the network 24, and through the wireless router's 26 firewall protecting the wireless router 26 (not shown).

Although the above describes the host system 25 as being used within a networked environment, this is just one embodiment of one type of host service that offers push-based messages for a handheld wireless device that is capable of notifying and presenting the data to the user in real-time at the mobile device when data arrives at the host system.

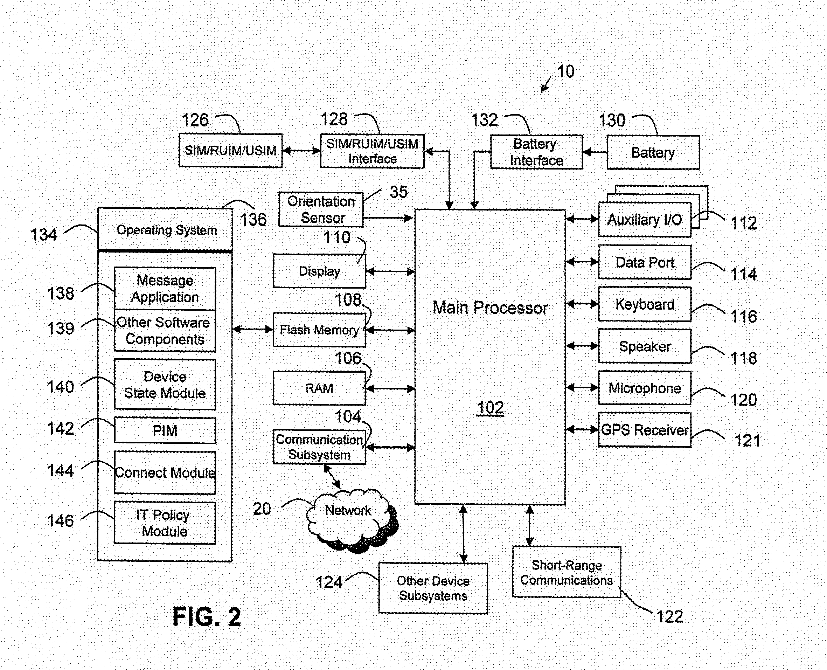

By offering a wireless router 26 (sometimes referred to as a "relay", "message server", "data redirector", etc.), there are a number of major advantages to both the host system 25 and the wireless network 20. The host system 25 in general runs a host service that is considered to be any computer program that is running on one or more computer systems. The host service is said to be running on a host system 25, and one host system 25 can support any number of host services. A host service may or may not be aware of the fact that information is being channelled to mobile devices 10. For example an e-mail or message program 138 (see FIG. 2) might be receiving and processing e-mail while an associated program (e.g. an e-mail wireless mobility agent) is also monitoring the mailbox for the user and forwarding or pushing the same e-mail to a wireless device 10. A host service might also be modified to prepared and exchange information with mobile devices 10 via the wireless router 26, like customer relationship management software. In a third example, there might be a common access to a range of host services. For example a mobility agent might offer a Wireless Access Protocol (WAP) connection to several databases.

Although the system is exemplified as operating in a multi-way communications mode, certain aspects of the system could be used in a "one and one-half" or acknowledgment paging environment, or even with a one-way paging system. In such limited data messaging environments, the wireless router 26 still could abstract the mobile device 10 and wireless network 20, offer push services to standard web-based server systems and allow a host service in a host system 25 to reach the mobile device 10 in many countries.

The host system 25 shown herein can have many methods when establishing a communication link to the wireless router 26. For one skilled in the art of data communications the host system 25 could use connection protocols like TCP/IP, X.25, Frame Relay, ISDN, ATM or many other protocols to establish a point-to-point connection. Over this connection there are several tunnelling methods available to package and send the data, some of these include: HTTP/HTML, HTTP/XML, HTTP/Proprietary, FTP, SMTP or some other proprietary data exchange protocol. The type of host systems 25 that might employ the wireless router 26 to perform push could include: field service applications, e-mail services, stock quote services, banking services, stock trading services, field sales applications, advertising messages and many others. This wireless network 20 abstraction is made possible by the wireless router 26, which implements this routing and push functionality. The type of user-selected data items being exchanged by the host could include: E-mail messages, events, meeting notifications, address entries, journal entries, personal alerts, alarms, warnings, stock quotes, news bulletins, bank account transactions, field service updates, stock trades, heart-monitoring information, vending machine stock levels, meter reading data, GPS data, etc., but could, alternatively, include any other type of message that is transmitted to the host system 25, or that the host system 25 acquires through the use of intelligent agents, such as data that is received after the host system 25 initiates a search of a database or a website or a bulletin board.

The wireless router 26 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the existing and upcoming third-generation (3G) and fourth generation (4G) networks like EDGE, UMTS and HSDPA, LTE, Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 25, the wireless router 26 may implement a set of defined functions. It can be appreciated that one could select many different hardware configurations for the wireless router 26, however, many of the same or similar set of features would likely be present in the different configurations. The wireless router 26 may offer any one or more of the following features for host services: 1) An addressing method so that mobile device 10 traffic can be addressed to a host system 25 without the need for the wireless network 20 to assign an identity to each host system 25; 2) An efficient and authenticated method for the host system 25 to initiate a communication connection to the wireless router 26 for the purposes of opening a communication tunnel to the one or more mobile devices 10 that the host system 25 wishes to communicate with; 3) A reliable method for exchanging data between the host system 25 and the mobile device 10, in a manner consistent with the abilities of the wireless network 20; 4) Providing feedback to the host system 25 when data is delivered, which allows the host system to clean up any wireless delivery queues if necessary, or inform the original sender (user or program) that the data has been delivered to the mobile device 10; 5) Implementation of a wireless network 20 initiated push of services or data to a mobile device 10, from a wireless router 26; and 6) Connect to a wide range of wireless networks 20 and provide a way of tracking the user's location so that a 'follow you anywhere' solution can be provided.

An example configuration for the mobile device 10 is illustrated in FIGS. 2-3. Referring first to FIG. 2, shown therein is a block diagram of an example embodiment of a mobile device 10. The mobile device 10 comprises a number of components such as a main processor 102 that controls the overall operation of the mobile device 10. Communication functions, including data and voice communications, are performed through a communication subsystem 104. The communication subsystem 104 receives messages from and sends messages to a wireless network 20. In this example embodiment of the mobile device 10, the communication subsystem 104 is configured in accordance with the GSM and GPRS standards, which are used worldwide. Other communication configurations that are equally applicable are the 3G and 4G networks discussed above. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 20 represents one or more different Radio Frequency (RF) channels, operating according to defined protocols specified for GSM/GPRS communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a GPS receiver 121, short-range communications 122, and other device subsystems 124. As will be discussed below, the short-range communications 122 can implement any suitable or desirable device-to-device or peer-to-peer communications protocol capable of communicating at a relatively short range, e.g. directly from one device to another. Examples include Bluetooth®, ad-hoc WiFi, infrared, or any "long-range" protocol re-configured to utilize available short-range components. It will therefore be appreciated that short-range communications 122 may represent any hardware, software or combination of both that enable a communication protocol to be implemented between devices or entities in a short range scenario, such protocol being standard or proprietary.

Some of the subsystems of the mobile device 10 perform communication-related functions, whereas other subsystems may provide "resident" or on-device functions. By way of example, the display 110 and the keyboard 116 may be used for both communication-related functions, such as entering a text message for transmission over the network 20, and device-resident functions such as a calculator or task list.

The mobile device 10 can send and receive communication signals over the wireless network 20 after required network registration or activation procedures have been completed. Network access is associated with a subscriber or user of the mobile device 10. To identify a subscriber, the mobile device 10 may use a subscriber module component or "smart card" 126, such as a Subscriber Identity Module (SIM), a Removable User Identity Module (RUIM) and a Universal Subscriber Identity Module (USIM). In the example shown, a SIM/RUIM/USIM 126 is to be inserted into a SIM/RUIM/USIM interface 128 in order to communicate with a network. Without the component 126, the mobile device 10 is not fully operational for communication with the wireless network 20. Once the SIM/RUIM/USIM 126 is inserted into the SIM/RUIM/USIM interface 128, it is coupled to the main processor 102.

The mobile device 10 is typically a battery-powered device and in this example includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 10. Although current technology makes use of a battery, future technologies such as micro fuel cells may provide the power to the mobile device 10.

The mobile device 10 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 10 during its manufacture. Software applications may include a message application 138, a device state module 140, a Personal Information Manager (PIM) 142, a connect module 144 and an IT policy module 146. A message application 138 can be any suitable software program that allows a user of the mobile device 10 to send and receive electronic messages, wherein messages are typically stored in the flash memory 108 of the mobile device 10. A device state module 140 provides persistence, i.e. the device state module 140 ensures that important device data is stored in persistent memory, such as the flash memory 108, so that the data is not lost when the mobile device 10 is turned off or loses power. A PIM 142 includes functionality for organizing and controlling data items of interest to the user, such as, but not limited to, e-mail, text messages, instant messages, contacts, events, and voice mails, and may interact with the wireless network 20. A connect module 144 implements the communication protocols that are required for the mobile device 10 to communicate with the wireless infrastructure and any host system 25, such as an enterprise system, that the mobile device 10 is authorized to interface with. An IT policy module 146 receives IT policy data that encodes the IT policy, and may be responsible for organizing and securing rules such as the "Set Maximum Password Attempts" IT policy.

Other types of software applications or components 139 can also be installed on the mobile device 10. These software applications 139 can be pre-installed applications (i.e. other than message application 138) or third party applications, which are added after the manufacture of the mobile device 10. Examples of third party applications include games, calculators, utilities, etc. The additional applications 139 can be loaded onto the mobile device 10 through at least one of the wireless network 20, the auxiliary I/O subsystem 112, the data port 114, the short-range communications subsystem 122, or any other suitable device subsystem 124.

The data port 114 can be any suitable port that enables data communication between the mobile device 10 and another computing device. The data port 114 can be a serial or a parallel port. In some instances, the data port 114 can be a USB port that includes data lines for data transfer and a supply line that can provide a charging current to charge the battery 130 of the mobile device 10.

For voice communications, received signals are output to the speaker 118, and signals for transmission are generated by the microphone 120. Although voice or audio signal output is accomplished primarily through the speaker 118, the display 110 can also be used to provide additional information such as the identity of a calling party, duration of a voice call, or other voice call related information.

For composing data items, such as e-mail messages, for example, a user or subscriber could use a touch-sensitive overlay (not shown) on the display 110 that is part of a touch screen display (not shown), in addition to possibly the auxiliary I/O subsystem 112. The auxiliary I/O subsystem 112 may include devices such as: a mouse, track ball, infrared fingerprint detector, or a roller wheel with dynamic button pressing capability. A composed item may be transmitted over the wireless network 20 through the communication subsystem 104.

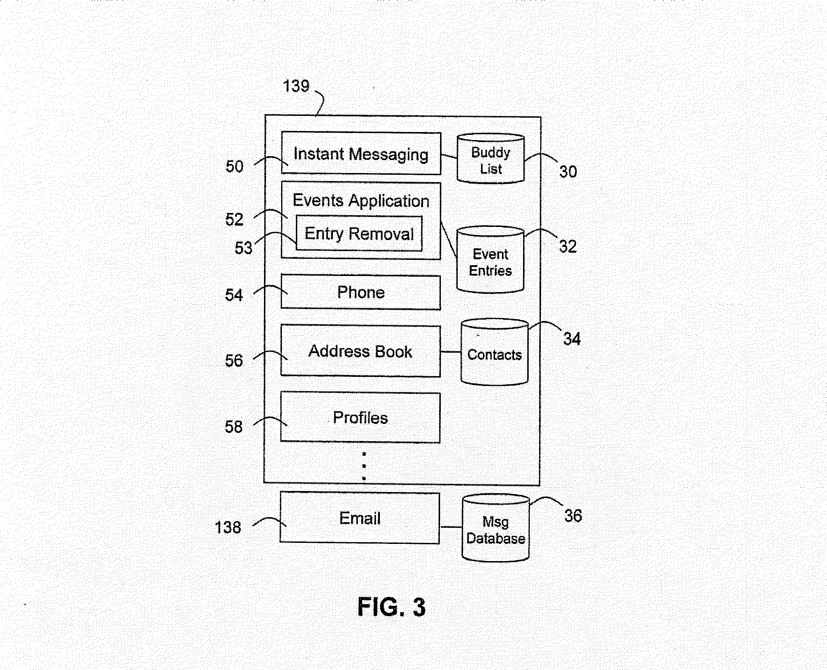

FIG. 3 shows an example of the other software applications and components 139 that may be stored on and used with the mobile device 10. Only examples are shown in FIG. 3 and such examples are not to be considered exhaustive. In this example, an instant messaging application 50, events application 52 (e.g. a calendar or other event related organizer) comprising an entry removal sub-application or module 53, phone application 54, address book 56 and a profiles application 58 are shown to illustrate the various features that may be provided by the mobile device 10. Also shown in FIG. 3 is the message application 138, which in the following will be referred to as an email application 138 for clarity and stores or otherwise has access to a message database 36 for storing incoming and outgoing messages as well as those stored in various folders. It will be appreciated that the various applications may operate independently or may utilize features of other applications. For example, the phone application 54 and email application 138 may use the address book 56 for contact details obtained from a list of contacts 34.

The instant messaging application 50 is an instant messaging service that may hosted and provided by the host system 25, e.g. using a messaging server at the wireless router 26 or may be associated with a 3^{rd} party instant messaging service (not shown). The instant messaging application 50 comprises or otherwise has access to contact information often referred to as a "buddy" list 30. The events application 52 comprises or otherwise has access to a portion of memory, database or other data storage device storing event entries 32 which may include any data or information associated with a particular date and time in the events application 52 and may be displayed in a graphical user interface (GUI) therefor.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, wireless router 26, host system 25, etc., or accessible or connectable thereto. Any application or module herein described may be implemented using computer readable/executable instructions that may be stored or otherwise held by such computer readable media.

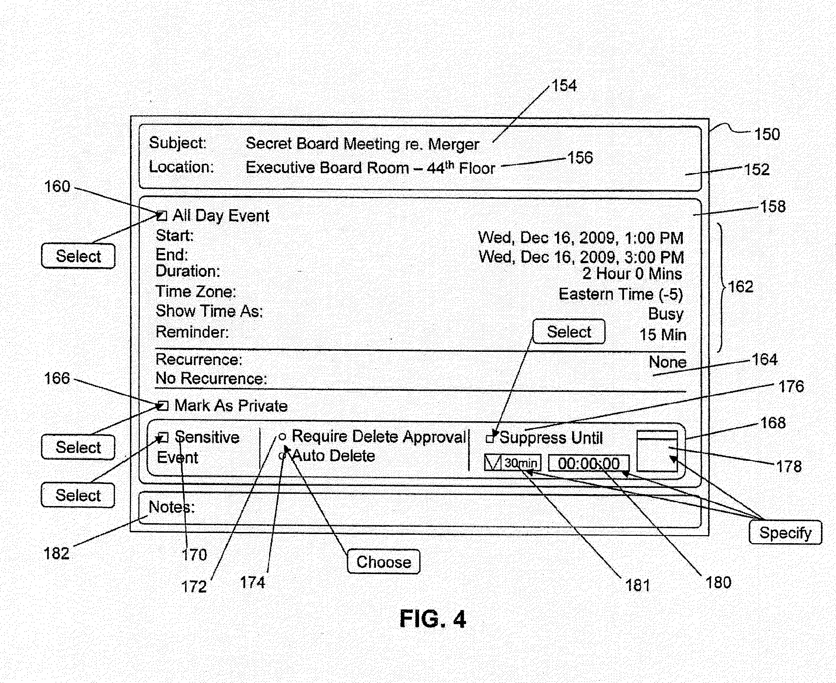

The events application 52 may be initiated or otherwise accessed or launched by, for example, selecting a corresponding icon (not shown) displayed on the mobile device 10 as is well known in the art. Within a typical events application, new events, also known as appointments can be entered into a user's events application in various ways. For example, the user may select a block of time within a events view (e.g. blocks of time during the day) and begin entering text associated with the event or appointment to create a new entry. Alternatively, as shown in FIG. 4, a user interface (UI) providing a new entry screen 150 can be used to specify details and features of the event or appointment. Such a new entry screen 150 can be access through a menu (not shown) or other appropriate input mechanism. For simplicity, any event or appointment or other block of time associated with an occurrence in the events application 52 will be referred to as an event.

In the example shown in FIG. 4, the new entry screen 150 comprises a heading portion 150, a details portion 158, and a notes portion 182. The heading portion 150 enables a subject 154 and a location 156 for the event to be specified, wherein typically the subject 154 is used to identify the event in the display in a short-hand manner. The notes portion 182 enables additional information to be added to the event entry, for example agenda items or other information pertinent to the corresponding event.

The details portion 158 provides the ability to specify various parameters 162 for the event. In the example shown, the parameters include start time, end time, duration, time zone, how to display the user's availability during that time (Show Time As), and when to provide a reminder (if any). It can be appreciated that such parameters may be interrelated and a setting in one or more of the parameters can thus cause another parameter to change. For example, the end time with respect to the start time should automatically adjust the duration accordingly. Rather than specify specific times for the appointment, an All Day Event option 160 can also be provided to enable the event to span the entire day in the view. An event can also be a recurring event and thus recurrence settings 164 can also be specified in this example. In FIG. 4, there is no recurrence of the event. However, although not shown in FIG. 4, the event can be set to be a recurring event, e.g. daily, weekly, monthly, etc. which then enables the user to enter appropriate settings for the recurring event, such as the end date for the event (or never), which day (when weekly or monthly), etc. as is well known in the art.

In order to control the event's visibility to other attendees in a shared events application 52, a Mark As Private option 166 can also be provided. In this way, by selecting the Mark As Private option 166, the user can control read permissions across a group sharing the information in their events applications 52. For example, if a user that normally shares their events application 52 has a private meeting, e.g. a job interview that they do not wish to divulge, they can use the Mark as Private option 166 to ensure that the other members of the group know that they are busy but do not know the details.

As discussed above, to protect certain sensitive event entries 32 from unwanted exposure due to someone having access to the mobile device 10 itself, the event can be made sensitive. In this example, by selecting a Sensitive Event option 170, the event is designated as a sensitive event and various sensitivity parameters 168 can be selected. Also, in this example, the user is made to choose between a Require Delete Approval option 172 or an Auto Delete option 174 to specify whether or not the user should be given a yes/no prompt asking them whether to delete the entry 32 (yes) or not (no), before the event entry 32 is actually deleted from the events application 52, i.e. approval from each attendee is required. This enables the user to change their mind about the sensitivity of the entry 32. In this example, the Require Delete Approval option 172 and the Auto Delete option 174 are given using radio buttons to require selection of one or the other. It can be appreciated that in other embodiments (not shown), a default selection could instead be imposed, for example, to always use the Auto Delete option 174 or to always use the Require Delete Approval option 172. In another embodiment (not shown), an option to simply notify the user that the entry 32 will be deleted may be provided which still automatically deletes the entry 32.

It can be appreciated that in addition to controlling whether or not sensitive data is retained in the device, any deletion of the event entries advantageously frees up storage space. Where files or other attachments are associated with the entry 32, significant storage savings can be achieved over time. As such, irrespective of the actual sensitivity of the event and its details, the event can be so designated to effect deletion of the entry 32 (and associated data) to recover consumed storage space. Although the examples described herein are provided in the context of effecting removal and suppression of data by marking an entry as sensitive, the principles described herein equally apply to providing an option (not shown) for effecting removal for the purpose of memory and storage recovery.

It has also been recognized that if an event is considered sensitive, not only can the details of the event be removed once the event has occurred, but the details can also be suppressed from the time the event entry 32 is created until some time before the event occurs. In other words, given the sensitivity of the event details, the user should be able to suppress those details for the majority of the time the event entry 32 exists. To ensure that the event details are available to the user at least for some time prior to the event start time, a Suppress Until option 176 can be selected. In this example, three example mechanisms are shown for enabling the user to specify how long before the event the details should be revealed. It will be appreciated that any one or more mechanisms can be provided or, alternatively, a fixed default setting may be used where appropriate, e.g. "always show 30 minutes before event". It will also be appreciated that if the Suppress Until option 176 is not selected, all future sensitive events (including recurring instances of the event entry 32 being created) would be visible at all times up to the end of the event. However, assuming the Sensitive Event option 170 has been selected, as soon as the event passes, the entry 32 would be deleted either automatically or through a prompt.

A pull down menu 181 may be used to select from a list of relative times prior to the event, e.g. 15 minutes, 30 minutes, 1 hour, etc. By using the pull down menu 181, the event details would be revealed in the entry 32 when the specified number of minutes (or hours) prior to the event is detected. A time entry box 180 can also be used to specify with more granularity, an exact time when the event details will be revealed. The time entry box 180 can be provided instead of the pull down menu 181 or as an alternative to allow either pre-set times or user-specified times. Typically, the event details would be revealed at some point close to the event, on the same day as the event, given the sensitivity. However, a date selection mechanism 178 can also be provided to enable the user to specify the date on which the event details are revealed. The date selection mechanism 178, in combination with the time entry box 180 can enable the user to specify an exact date and time when the event details will be revealed. For recurring events, the pull down menu 181, which imposes a relative time before the start of the event, is typically more appropriate as otherwise a specific date and time would need to be specified for each recurring event until termination (which can be never). For example, a weekly recurring event at 10:30 am on Mondays with a 30 minute "suppress until" setting would reveal the event details for each occurrence, only at 10:00 am on the Monday before that occurrence while keeping details of the other occurrences of the event hidden. However, if desired, both the relative time and specific time and date options can be provided for both the recurring and non-recurring events.

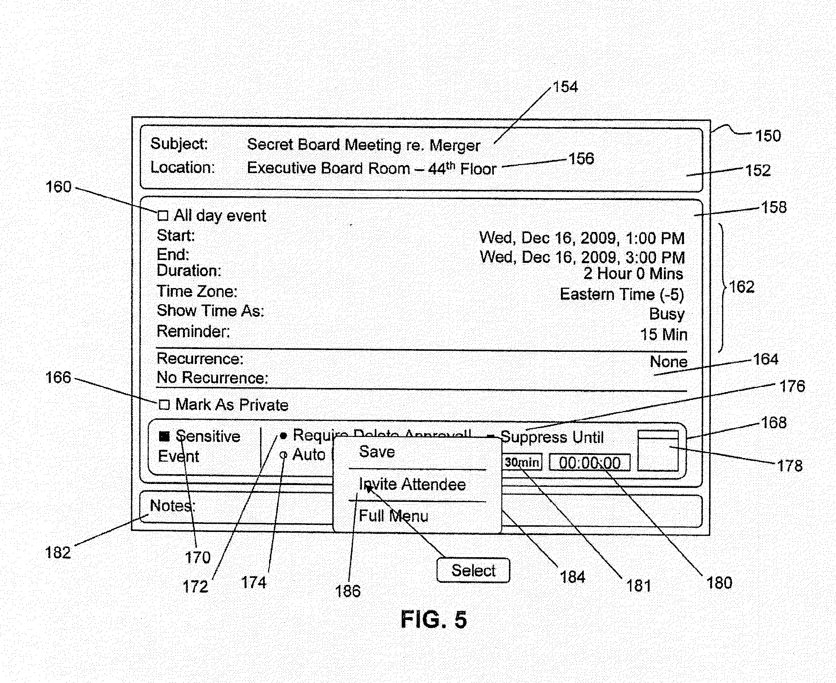

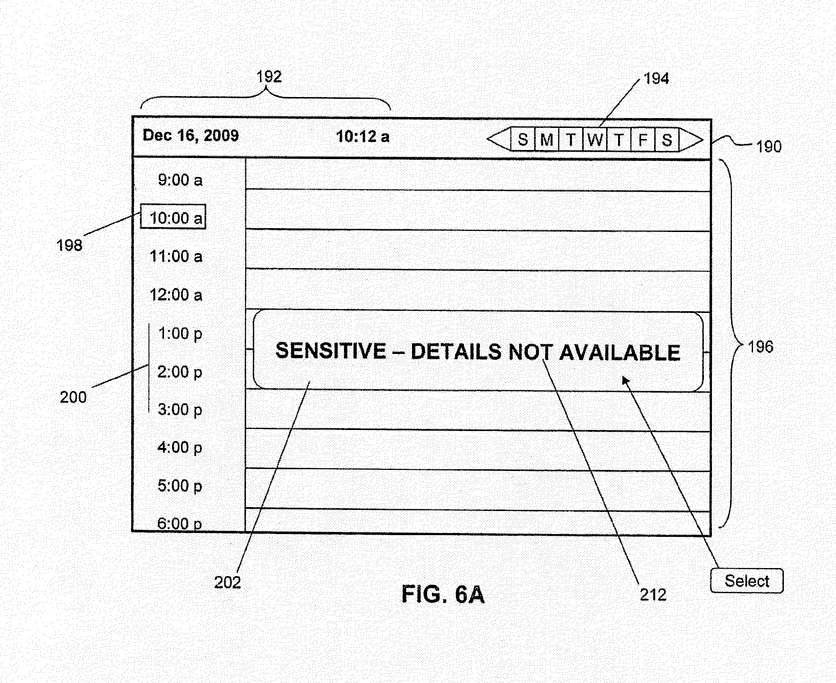

The example in FIG. 4 would involve creating a sensitive event entry 32 for a secret board meeting regarding a merger at 1:00 pm to 3:00 pm on Wednesday December 16, 2009. The location of the secret board meeting is also given. To avoid the exposure of the meeting through malicious or inadvertent examination of an attendee's mobile device 10, the meeting details can be hidden when creating the event appointment as shown in FIG. 4. By selecting the Sensitive Meeting option 170 and selecting appropriate sensitivity parameters 168, the details such as what the meeting is about, who is attending, the location of the meeting, and meeting agenda items can be suppressed until a specified time before the meeting. By invoking or initiating a menu 184 as shown in FIG. 5, other attendees can be invited by selecting an Invite Attendee option 186 as is well known in the art. As also seen in FIG. 5, in this example, the particular event has been marked as sensitive, requires a prompt to delete the entry 32, and will suppress the details until 30 minutes before the event. Once the event is created and any other attendees invited, a event entry block 202 is inserted into an event screen 190 as shown in FIG. 6A.

Turning now to FIG. 6A, the event screen 190 can be initiated or invoked by selecting an associated icon (not shown) that corresponds to the events application 52. The event screen 190 comprises date and time information 192 and a day of the week selector 194 as a header, with a series of time blocks 196 listed below. In this example, a day view is shown and it can be appreciated that other views may be available such as week views or month views. Each time block in this example represents an hour of the specified day. The current time may be highlighted using a box 198 (e.g. 10:00 am as shown). An event indicator 200 can also be used to identify the times associated with an event block 202 that is inserted into the series of time blocks 202. In this example, the event details have been suppressed and instead a caption provided, e.g. "Sensitive - Details Not Available" as shown. It can be appreciated that an empty block or no block at all can be used requiring the memory of the user to determine when the sensitive event was planned. It can therefore be appreciated that the sensitive event can be displayed, in its suppressed form, in any suitable manner that depends on the application and/or preferences.

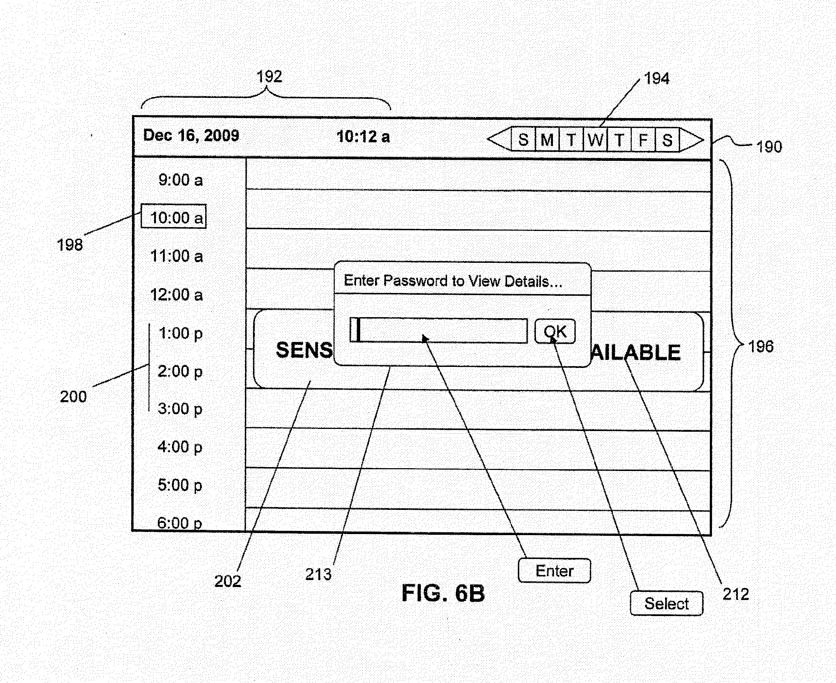

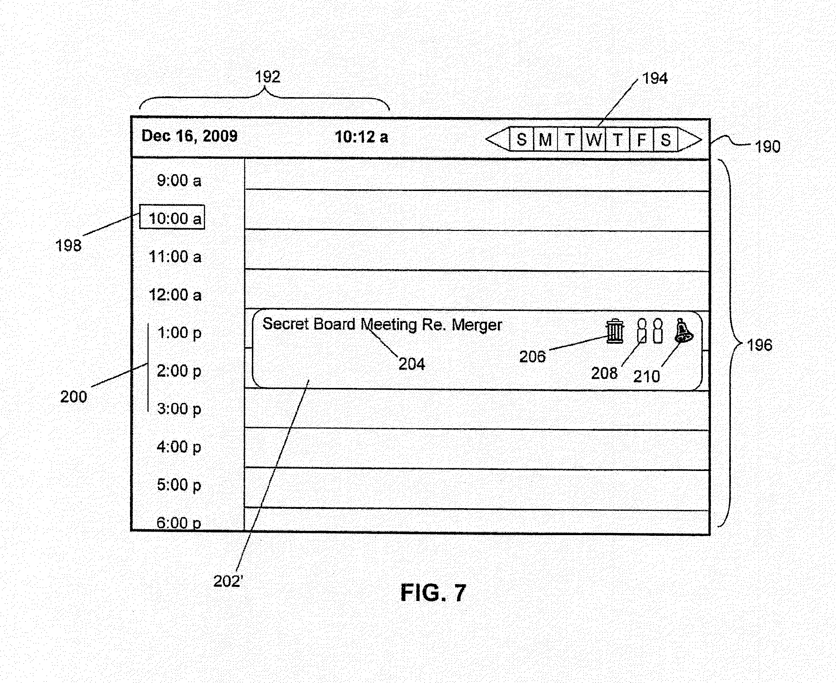

Although the event details have been suppressed, it has been found that the user should have access to the event details upon request. However, to maintain secrecy and thus honour the sensitivity of the event, by selecting the event block 202 as shown in FIG. 6A, an access entry mechanism such as a password entry window 213 can be provided as shown in FIG. 6B. The password entry window 213 requires the user to re-authenticate themselves using, for example, a device password. Alternatively, an application-specific password can be created and used for the purpose of re-authenticating a user for permitting access to event details. By entering the appropriate password in the password entry window 213, the event details can be revealed as shown in FIG. 7. In FIG. 7, the entry block 202 from FIG. 6A is converted to a normal or conventional event block 202' which can be opened and viewed as a non-sensitive event block would. It can be appreciated that the conventional entry block 202' would appear at the specified date and time or the specified number of minutes or hours before the event automatically when using the Suppress Until option 176.

It may also be noted that if the user re-authenticates with a password before the "suppress until" time (i.e. the time associated with the Suppress Until option 176), the conventional entry block 202' should only be revealed for the current session and then should revert to the entry block 202, e.g. as shown in FIG. 6A when the mobile device 10 is locked or after a predetermined amount of time to ensure that the event details are only temporarily revealed unless the "suppress until" time has arrived. For example, if a user wishes to check the event details 2 hours before the event and the "suppress until" time is 30 minutes prior, they would need to re-authenticate with a password. If the device automatically locks or a certain amount of time has passed, the event details are hidden. The user may then wish to view the event details again 1 hour prior to the event. In this case, a re-authentication is again required since the "suppress until" time has not yet been reached. In other words, the password entry to expose the event details is a temporary measure that should not override the "suppress until" function. If the user wishes to expose the details for a longer period, they can edit the event details to extend the suppress until time window.

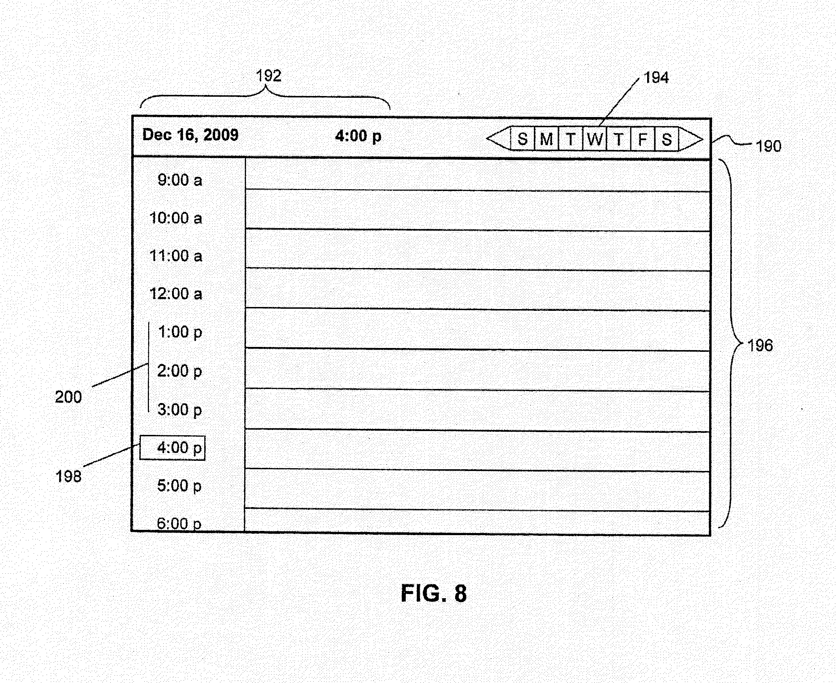

Once the event has passed, the conventional entry block 202', which would be displayed near and during the event, can be removed to hide any trace of the details of the event. In the example shown in FIG. 4, the details of the secret board meeting regarding the merger would be removed. In this way, if the mobile device 10 for one of the attendees is viewed by someone other than the attendees, the details would not be revealed. FIG. 8 illustrates the same day view as shown in FIGS. 6A, 6B, and 7 but with the entry blocks 202, 202' removed and at a time after the sensitive event. If the particular application permits such a feature, at a later date, the user can be permitted to unhide the details of the sensitive event, for example, by re-authenticating with a password as illustrated in FIG. 6B before the meeting when the details were suppressed. It can be appreciated, however, that other embodiments may restrict or inhibit the retrieval of sensitive details. In such embodiments, it can be appreciated that some other features may be restricted. For example, if retrieval of sensitive details either before or after the event is restricted, the Require Delete Approval option 172 may not be necessary or appropriate. In this case, the entry screen 150 shown in FIGS. 4 and 5 could also include an option to allow the user to allow or to not allow detail retrieval outside of the suppress until window (not shown). Such a feature could be included in the sensitive parameters 168 portion of the entry screen 150. Therefore, it can be appreciated that various combinations of the herein described features for restricting access to the sensitive details can be used in different applications and according to different requirements or security parameters or policies.

In FIG. 8, the indicator 200 is kept in the event screen 190 to enable the user to find the sensitive meeting at which point they can use an appropriate selection mechanism such as selecting the seemingly empty time block associated with the sensitive event to open the password entry window 213. By re-authenticating the user, the conventional entry block 202' shown in FIG. 7 can be displayed to enable the user to view details of a past sensitive event. It can be appreciated that following the event, the event screen 190 can instead revert to the entry block 202 shown in FIG. 6A to enable the user to more easily find the entry. Alternatively, an unhide option can be provided in a menu (not shown). The entry removal 53 module can thus be used to not only remove entire entries from the events application 52, it can also be used to hide and unhide only the details while maintaining the entry itself in the events application 52, i.e. without complete termination of the entry.

It may be noted that in other embodiments, when desired, the retrieval of sensitive event details after the event may not be permitted. In such cases when the Auto Delete option 174 or when the user approves the deletion in response to a prompt, the event would be deleted permanently. No marker, such as indicator 200, would exist in those cases and thus the event details would simply be irretrievable.

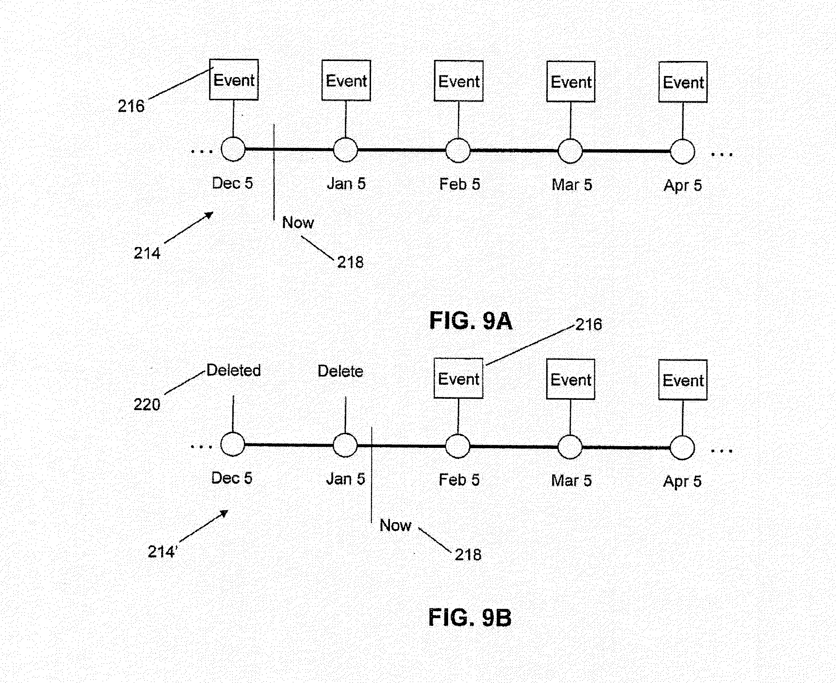

Turning now to FIGS. 9A and 9B, when a recurring event is created, and marked sensitive, the start date of the series can be adjusted as occurrences of the events pass. In FIG. 9A, a recurring monthly event 216 on the 5^{th} of each month is shown schematically as a series 214. If the current date 218 is just after the December 5^{th} event 216 as shown in FIG. 9A, events prior to now should be removed (or hidden as discussed above) and the start date of the series changed. In FIG. 9B, the current date 218 is just after the January 5^{th} event 216 and thus the deleted or hidden entries 220 cause the February 5^{th} event 216 to be considered the start of a modified series 214'. As discussed above, according to the particular embodiment, if retrieval of past events is permitted, to view past events 220, a re-authentication using, for example, a password.

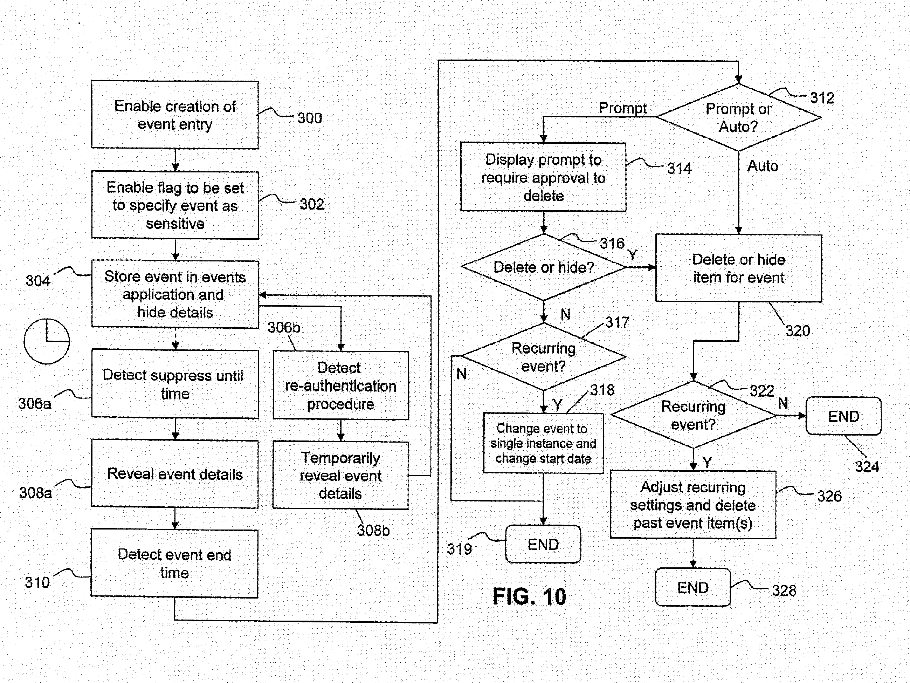

FIG. 10 illustrates an example set of computer executable instructions that can be executed by the events application 52 using its entry removal module 53 in this example to delete or hide event details according to the settings and parameters entered in the entry screen 150 shown in FIG. 4. At 300, the events application 52 enables the creation of an event 216, e.g. by displaying the entry screen 150 upon detecting initiation of same. At 300, in the entry screen 150, the events application 52 enables a flag to be set to specify the event 216 as sensitive. In the example provided herein, the Sensitive Meeting option 170 is provided in the entry screen to enable such a flag to be set. Once the details and parameters are entered, upon detecting that the event 216 is to be created, the events application 52 creates and stores the event 216 in the events application 52, e.g. by creating an entry block 202 which hides the details as shown in FIG. 6A at 304. As can be appreciated, time will typically elapse before the event 216 occurs or the user will reveal the details by re-authentication using a password.

At 306a, the events application 52 detects the "suppress until" time, namely the time at which the event details are to be revealed before the event 216 occurs. Until the "suppress until" time occurs, at 306B, the events application 52 may detect the initiation and execution of the re-authentication procedures, e.g. using the password entry window 213 to temporarily reveal the event details at 308b, which requires a successful re-authentication. After a prescribed amount of time or when the mobile device 10 is locked or any other suitable criterion is met, the details are again hidden at 304. Returning to 306a, when the "suppress until" time occurs, the event details are revealed in the conventional entry block 202' at 308a. The event details would then be visible for a period of time, e.g. 30 minutes before the event 216 and typically during the event 216. However, it can be appreciated that additional options can be provided (not shown) to suppress the event details during the meeting or to only reveal details upon re-authentication. Similarly, instead of automatically revealing the details, the events application 52 could prompt the user to re-authenticate as a reminder of the meeting but also to ensure that the re-authentication is required to view the meeting details.

In the example discussed herein, the end time for the event 216 would then be detected at 310 and the entry removal module 53 can be initiated at 312 to determine if the user should be prompted to obtain approval for deleting or hiding the event details, or if this should be done automatically. If a prompt is to be used, an appropriate prompt can be displayed on the mobile device 10 at 314, which allows, for example, the user to select "NO" thus denying approval to delete the entry 32. At 316, the entry removal module 53 determines if the user has selected "YES" to approve the deletion or "NO" to reject the deletion and thus whether the entry details should be removed/hidden or not. For example, in some cases once the event 216 has occurred (such as a surprise birthday party), the sensitivity is no longer applicable and thus the user can opt to not delete/hide the entry details by selecting "NO" at 316. If the user rejects the deletion of the event entry 32 at 316, the entry removal module 53 then determines at 317 if the event 216 is a recurring event 216. If the event 216 is a recurring event 216, the entry 32, which will now not be deleted, is changed to a single instance event 216 and the future events 216 are modified such that the next event 216 is the start date in the reoccurrence at 318. This addresses the situation wherein this particular occurrence is kept but the next one is deleted to ensure that the start date is always adjusted to reflect the new starting date in the series of events 214. If the event 216 is a single instance event 216 or after it has been changed to a single instance event 216, the process ends at 319.

If at 316, the user does indicate that the entry should be deleted or the details hidden, at 320, the entry is deleted (e.g. as shown in FIG. 8) or the entry details hidden (e.g. as shown in FIG. 6A) which as discussed above can also recover consumed storage space. The entry removal module 53 then determines if the event 216 is a recurring event 216 at 322. If not, the process ends at 324. If the event 216 is a recurring event 216, the recurring settings can be adjusted to indicate a new start time in the future (i.e. the next occurrence) and the past event(s) 216 deleted or hidden at 326. The process would then end at 328.

As discussed above, in addition to enabling the suppression and/or deletion of potentially sensitive data and information, the principles described herein may equally be applied for the purpose of recovering storage space that is consumed by adding entries 32 and any files or other attachments associated with the entries 32. As such, in addition to or instead of the Sensitive Event option 170, an option (not shown) can be provided to effect such recovery of storage space by deleting or otherwise removing entries 32 at appropriate times, e.g. when the event time period passes.

It can be appreciated that although the principles discussed herein are shown by way of example using a mobile device 10, such principles are equally applicable to any electronic event-related program used on any computing device such as a desktop computer, laptop computer or special purpose computer. In such cases, the re-authentication procedure to reveal entry details could be linked to a network or computer password that already exists or, if such a password does not exist or an application-specific password is desired, a separate password can be used.

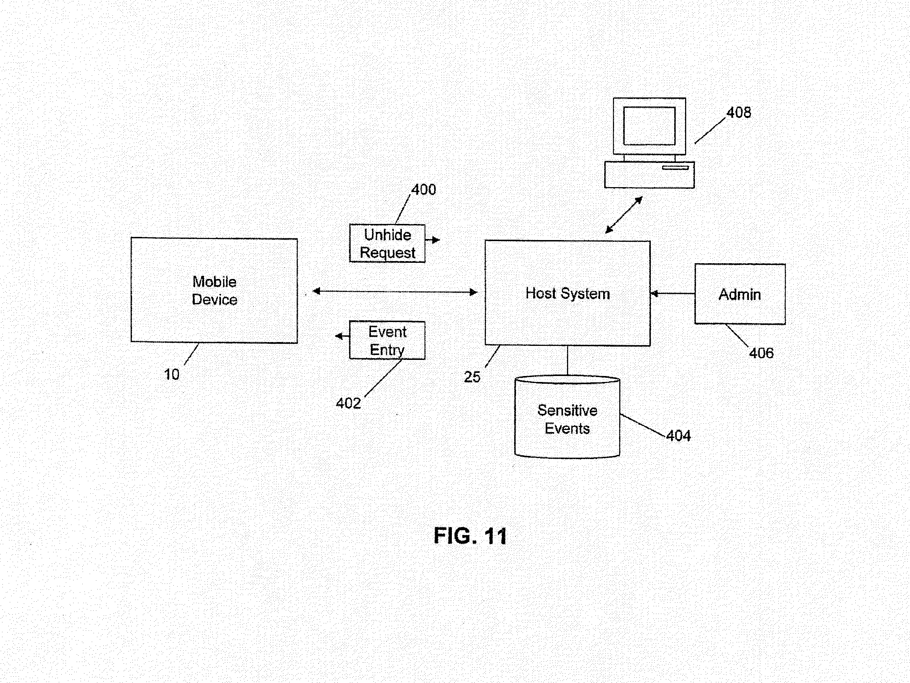

It can also be appreciated that in systems such as the one shown in FIGS. 1 and 11, wherein the mobile device 10 communicates with and can be synchronized with data and information in a host system 25, coordination may be required to ensure deleted or hidden entries 32 are updated on both the mobile device 10 and any computing device 408 associated with the mobile device 10 and accessible through the host system 25 as shown in FIG. 11. Also, when details are hidden or event entries removed, the host system 25 can be used to store sensitive events in a data storage 404 to reduce the memory burden of the mobile device 10 or to provide increased protection and privacy for such sensitive entries. For example, in the example shown in FIG. 11, it is assumed that when an event is passed, the mobile device 10 and an associated desktop computer may be configured to delete the entry while the host system 25 is configured to retain a copy of the details and/or the entire entry. This allows an unhide request 400 (e.g. embodied by a message) to be sent to the host system 25 when the user attempts to re-authenticate using a password, at which time the host system 25 can return an event entry message 402 or the details for the entry. A similar mechanism can be done in parallel or independently using the desktop computer 408. As such, it can be appreciated that where available, a server device or proxy can be utilized to manage the sensitive details to allow complete deletion at the mobile device 10 (or desktop computer 408) while still enabling details to be unhidden or revealed if the user is re-authenticated. Also shown in FIG. 11 is an administrator (Admin) 406 which can be used to control the use of the host system 25 for controlling sensitive entries 32 and to modify permissions etc. Therefore, it can be seen that the sensitivity of event entries can be managed at the device level or at the network/system level without departing from the principles discussed above.

Although the above has been described with reference to certain specific embodiments, various modifications thereof will be apparent to those skilled in the art without departing from the scope of the claims appended hereto.

## Claims

1. A method of controlling event entries in a computing device, the method comprising:
enabling an event entry to be stored in the computing device;
receiving a designation for the event entry indicative of the event being sensitive and indicating the designation in association with the event entry;
receiving a request to access the event entry;
obtaining the event entry and examining the event entry to detect the designation; and
upon detecting the designation, suppressing the output of information associated with the event entry according to one or more criteria associated with the designation.

2. The method according to claim 1, wherein the one or more criteria relate to a start time associated with the event entry, and wherein the information associated with the event entry is suppressed until a specified time prior to the start time for the event entry.

3. The method according to claim 2, wherein the information associated with the event entry is also suppressed after an end time for the event entry.

4. The method according to claim 2 or claim 3, further comprising enabling an authentication procedure to be performed to reveal the information associated with the event entry prior to the start time for the event.

5. The method according to claim 1 or claim 4, wherein the one or more criteria relate to an end time associated with the event entry, and wherein the information associated with the event entry is suppressed after the end time for the event entry.

6. The method according to claim 5, further comprising displaying a prompt upon detecting the end time for the event entry, wherein the prompt provides an option to suppress the information or to not suppress the information.

7. The method according to claim 5 or claim 6, further comprising enabling an authentication procedure to be performed to reveal the information associated with the event entry prior to the start time for the event.

8. The method according to any one of claims 1 to 7, wherein the one or more criteria comprises suppression of the information associated with the event entry until a successful authentication procedure occurs.

9. The method according to claim 8, wherein the authentication procedure comprises detecting entry of a password.

10. The method according to any one of claims 1 to 9, wherein the one or more criteria relate to a recurring event including the event entry, wherein the information associated with the event entry is suppressed after an end time for the event entry, and wherein the method further comprises readjusting a start time for the recurring event to correspond to a next event in the recurring event.

11. A computer readable medium comprising computer executable instructions for controlling event entries in a computing device, the computer readable medium comprising instructions that when executed by a computing device perform the method according to any one of claims 1 to 10.

12. A mobile device comprising a display, a processor, one or more input devices, computer executable instructions for initiating an events application, and computer executable instructions that when executed by the mobile device, cause the processor to perform the method according to any one of claims 1 to 10.

## Amended claims

### Amended claims in accordance with Rule 137(2) EPC.

**1.** A method of controlling event entries in a computing device (10), the method comprising:
enabling an event entry to be stored in the computing device (10);
receiving a designation for the event entry indicative of the event being sensitive and indicating the designation in association with the event entry;
receiving a request to access the event entry from a user interface accessible on the computing device (10);
obtaining the event entry and examining the event entry to detect the designation;
upon detecting the designation, suppressing the output of information associated with the event entry according to one or more criteria associated with the designation; and,
wherein the one or more criteria relate to a start time associated with the event entry, and wherein the information associated with the event entry is suppressed until a specified time prior to the start time for the event entry.

**2.** The method according to claim 1, wherein the information associated with the event entry is also suppressed after an end time for the event entry.

**3.** The method according to claim 1 or claim 2, further comprising enabling an authentication procedure to be performed to reveal the information associated with the event entry prior to the start time for the event.

**4.** The method according to claim 1 or claim 3, wherein the one or more criteria relate to an end time associated with the event entry, and wherein the information associated with the event entry is suppressed after the end time for the event entry.

**5.** The method according to claim 4, further comprising displaying a prompt upon detecting the end time for the event entry, wherein the prompt provides an option to suppress the information or to not suppress the information.

**6.** The method according to claim 4 or claim 5, further comprising enabling an authentication procedure to be performed to reveal the information associated with the event entry prior to the start time for the event.

**7.** The method according to any one of claims 1 to 6, wherein the one or more criteria comprises suppression of the information associated with the event entry until a successful authentication procedure occurs.

**8.** The method according to claim 7, wherein the authentication procedure comprises detecting entry of a password.

**9.** The method according to any one of claims 1 to 8, wherein the one or more criteria relate to a recurring event including the event entry, wherein the information associated with the event entry is suppressed after an end time for the event entry, and wherein the method further comprises readjusting a start time for the recurring event to correspond to a next event in the recurring event.

**10.** A computer readable medium comprising computer executable instructions for controlling event entries in a computing device (10), the computer readable medium comprising instructions that when executed by a computing device (10) perform the method according to any one of claims 1 to 9.

**11.** A mobile device (10) comprising a display (110), a processor (102), one or more input devices, computer executable instructions for initiating an events application, and computer executable instructions that when executed by the mobile device (10), cause the processor (102) to perform the method according to any one of claims 1 to 9.
